# EUROPÄISCHE PATENTANMELDUNG

(11) **EP 0 986 273 A1**
(43) Veröffentlichungstag der Anmeldung: **15.03.2000**
(21) Anmeldenummer: 98117205.9
(22) Anmeldetag: 09.09.1998
(51) Int. Cl.: H04Q 7/22

(54) **Versandt von Werbenachrichten über Kurznachrichtendienst (SMS)**

(71) Anmelder: Esker, Michael, 81539 München (DE)
(72) Erfinder: Jerchel, Norbert, 81539 München (DE)

(57) **Zusammenfassung**

Versendung von Werbemitteilungen aller Art, (Texte, Grafiken, Zeichnungen, Darstellungen aller Art) an Empfänger mit seiner Einwilligung. Die Übertragung erfolgt mittels SMS ( Short Message Service). Der Kunde willigt für eine vertraglich festgelegte Laufzeit dem Empfang dieser Mitteilungen ein.

## Beschreibung

Versendung von Werbemitteilungen per SMS.

Diese Möglichkeit bietet der Wirtschaft ein neues Segment auf dem Werbemarkt.

Bisher wurde diese Möglichkeit nur auf dem privaten Sektor genutzt SMS-Nachrichten zu versenden. Mit der gewerblichen Nutzung ist dies eine bisher nicht dagewesene Gelegenheit der Wirtschaft, schnell und direkt Werbung an den Endverbraucher zu übermitteln.

Obwohl viele anderweitige Möglichkeiten der Werbung vorhanden sind ist diese Neuerung ein entscheidender Schritt in Richtung zukunftsorientierter Werbung.

Die Mitteilungen werden via Internet an den Kunden gesandt, der diese dann auf seinem Display abruft.

Die erfindungsgemäße Möglichkeit kann in vielen Gebieten der Werbung eingesetzt werden.

Diese Werbemitteilungen werden via Internet an den Kunden versandt.

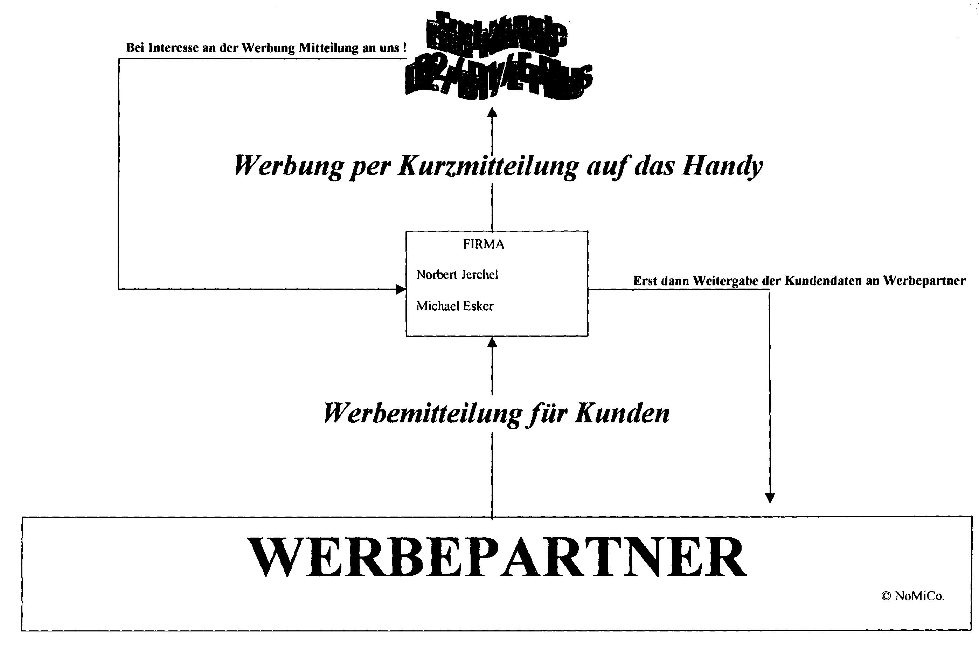

## Patentansprüche

1. Versendung von Werbemitteilungen alle Art per SMS.( Short-Message-Service)
